# EUROPÄISCHE PATENTSCHRIFT

(11) **EP 1 820 845 B1**
(45) Veröffentlichungstag und Bekanntmachung des Hinweises auf die Patenterteilung: **30.04.2008**
(21) Anmeldenummer: 06001716.7
(22) Anmeldetag: 27.01.2006
(51) Int. Cl.: C12C 7/14, A61H 33/02

(54) **Whirlpool**
Whirlpool
Whirlpool

(43) Veröffentlichungstag der Anmeldung: 22.08.2007
(73) Patentinhaber: KRONES AG, 93073 Neutraubling (DE)
(72) Erfinder: Wasmuht, Klaus, 91792 Ellingen (DE); Pritscher, Reinhard, 84030 Ergolding (DE); Kammerloher, Helmut, 85354 Freising (DE); Stippler, Kurt, Dr., 85417 Marzling (DE)
(74) Vertreter: Grünecker, Kinkeldey, Stockmair & Schwanhäusser Anwaltssozietät

(56) Entgegenhaltungen:
- WO-A-99/06525
- JP-A- 2002 306 151
- US-A- 4 836 097
- US-A- 4 945 823

## Beschreibung

Die Erfindung betrifft einen Whirlpool gemäß dem Oberbegriff des Anspruchs 1 Whirlpoole sind aus dem Stand der Technik wohlbekannt und werden im Sudhausprozess nach der Würzepfanne zur Heißtrubabscheidung eingesetzt (siehe z. B. Ludwig Narziss, "Abriss der Bierbrauerei", 5. Auflage, Ferdinand Enke Verlag, Stuttgart 1986, Seite 319).

Aus den Druckschriften US-A-4 836 097 und US-A-4 945 823 sind bereits Whirlpoole bekannt. Aus der WO-A-99 06525 ist bereits eine Austreibvorrichtung für unerwünschte aromatische Substanzen aus der Würze bekannt. Keine der Druckschriften zeigt einen Whirlpool, der eine äußere, um die innere Kammer herum angeordnete Kammer umfasst.

Während der Würzebereitung bei der Bierherstellung entstehen Aromastoffe, die dem Bier einen unerwünschten Geruch oder Geschmack verleihen können. Ein Beispiel eines solchen unerwünschten Stoffes ist Dimethylsulfid, das während des Aufheizens bzw. Kochens aus einer inaktiven Vorläufersubstanz entsteht, die im Malz enthalten ist. Dimethylsulfid, im Nachfolgenden auch DMS genannt, selber ist in dem Malz nur in geringer Menge vorhanden. Während des Kochprozesses in der Würzepfanne wird der inaktive Vorläufer in DMS und einen aktiven Vorläufer gespalten. Das DMS wird während des Kochprozesses in der Würzepfanne bzw. des Heizprozesses in den Maischgefässen nur teilweise ausgetrieben. Der aktive Vorläufer wird von der vorhandenen Hefe metabolisiert und zu DMS umgewandelt. Nach dem Kochprozess in der Würzepfanne ist also noch DMS in der Würze vorhanden. Darüber hinaus enthält die gekochte Würze noch weitere unerwünschte flüchtige Substanzen, unedle Aromastoffe, wie z. B. Carbonyle, schwefelhaltige Verbindungen u. Ä..

Im Anschluss an die Würzpfanne folgt, wie zuvor erläutert, zur Heißtrubabscheidung der Whirlpool. In dem Whirlpool wird die Würze heiß gehalten. Hier entstehen wiederum unerwünschte flüchtige Substanzen. Diese Substanzen führen im fertigen Bier zu unerwünschten Aromen und beeinträchtigen die Geschmacksstabilität. So entsteht z. B. während der Belegzeit des Whirlpools aus der inaktiven Vorläufersubstanz wiederum DMS.

Um auch die restlichen unerwünschten flüchtigen Substanzen aus der Würze zu entfernen, wurde schon ein so genannter "Wortstripping"-Prozess vorgeschlagen (D. Seldeslachts et al., Monatsschrift für Brauwissenschaft, Heft 3/4, 1997, Seite 76 sowie PCT WO 97/15654). Bei einem solchen Wortstripping-Prozess wird die Würze durch eine Wortstripping-Säule mit offener Packung geführt. Dampf nimmt einen Teil der unerwünschten flüchtigen Substanzen mit und führt diese durch eine Abgasleitung ab.

Der Aufbau und die Reinigung einer solchen Vorrichtung ist jedoch kompliziert und aufwändig.

In dem deutschen Gebrauchsmuster Nr. 29713679.8 wurde bereits vorgeschlagen, diese flüchtigen unerwünschten Substanzen mit Hilfe einer Vorrichtung auszutreiben, die wenigstens einen Umlenkschirm aufweist, der die austretende Würze umlenkt. Auch eine derartige Vorrichtung ist kompliziert und aufwändig.

Der vorliegenden Erfindung liegt daher die Aufgabe zugrunde, eine Vorrichtung und ein Verfahren bereitzustellen, die auf einfache Art und Weise ermöglichen, unerwünschte flüchtige Substanzen wie beispielsweise DMS auf einfache und kostengünstige Art und Weise aus der Würze zu entfernen.

Erfindungsgemäß wird diese Aufgabe durch die kennzeichnenden Merkmale der Ansprüche 1 und 11 gelöst.

Gemäß der vorliegenden Erfindung wird ein Whirlpool mit integriertem Stripper bereitgestellt, wobei eine innere Kammer zur Heißtrubabscheidung mittels Whirlpooleffekt dient und eine äußere Kammer, die um die innere Kammer angeordnet ist, als Stripper dient, um unerwünschte flüchtige Substanzen aus der von der inneren Kammer überführten Würze auszudampfen. Gemäß der vorliegenden Erfindung können somit die Schritte der Heißtrubabscheidung und des Strippens räumlich zusammengeführt werden. Die Integration beider Schritte in einer Vorrichtung bringt eine wesentliche Kostenersparnis und Platzersparnis mit sich, da für beide Prozesse nur noch eine Vorrichtung notwendig ist. Dadurch, dass die äußere Kammer die innere Kammer umgibt, kann der erfindungsgemäße Whirlpool mit integriertem Stripper auf kostengünstige und einfache Art und Weise gefertigt werden. Darüber hinaus kann in effektiver Art und Weise die Wärme des Whirlpools, dessen Kammerwände eine Temperatur von 90 bis 99°C aufweisen zum Ausdampfen der flüchtigen Substanzen in der äußeren Kammer genutzt werden. Die äußere Kammer dient darüber hinaus als Isolierung für die innere Kammer. Weitere Vorteile des Systems sind außerdem Zeitersparnis und der schonende Umgang mit dem sensiblen Medium Würze durch das Zusammenführen der Verfahrensschritte in einem Gefäß.

Vorteilhafterweise sind die innere und äußere Kammer konzentrisch ineinander angeordnet. Ein derartiger Aufbau ist besonders einfach und materialsparend, da die Wand der inneren Kammer gleichzeitig als Innenwand für die äußere Kammer bzw. den äußeren Ring dient.

Gemäß einer bevorzugten Ausführungsform weist der Whirlpool eine Verteilerrichtung auf, die aus der inneren Kammer überführte Würze über den Umfang der äußeren Kammer verteilt in den oberen Bereich der äußeren Kammer einbringt. Vorteilhafterweise umfasst die Verteilereinrichtung eine Ringleitung, die so ausgebildet ist, dass die Würze als Rieselfilm in die äußere Kammer eingebracht wird. Wenn die Würze als Rieselfilm in die äußere Kammer rieselt, wird das Ausdampfen der unerwünschten Substanzen der Würze aufgrund der vergrößerten Oberfläche begünstigt.

Die Verteilereinrichtung kann eine Ringleitung sein, die mehrere über den Umfang verteilte Öffnungen aufweist. Die Öffnungen können z.B. in zwei Reihen um 90° versetzt zueinander und jeweils im Winkel von 45° zur Vertikalen so angeordnet sein, dass eine Reihe zur Aussenwand und die andere Reihe zur Innenwand der äusseren Kammer hin gerichtet ist. Es ist auch möglich, die Ringleitung zumindest teilweise als offene Rieselrinne auszubilden, die wiederum Öffnungen und/oder seitliche Kerben aufweisen kann. Eine derartige Rieselrinne ist sehr einfach zu reinigen.

Die innere Kammer weist einen Würzezulauf auf, der die Würze im Wesentlichen tangential zur inneren Kammerwand einbringt und ein Einlaufelement umfasst, das mehrere übereinander angeordnete Auslassöffnungen oder einen Schlitz zur Auffächerung des Würzezuflusses aufweist. So kann in schonender Art und Weise der Inhalt in der inneren Kammer in eine leichte rotierende Bewegung unter Ausnutzung des Whirlpooleffekts gebracht werden. Das Einlaufelement befindet sich dabei an der Innenseite der inneren Kammer.

Es ist vorteilhaft, wenn der erfindungsgemäße Whirlpool einen Deckel umfasst, der die innere und obere Kammer von oben abdeckt, der einen Abzug aufweist, um die flüchtigen Substanzen abzuleiten.

Vorteilhafterweise wird die Würze mit einem Durchsatz durch die äußere Kammer geleitet, der so gewählt ist, dass sich die gewünschte Kühlung in 15 bis 30 Minuten eingestellt hat.

Die vorliegende Erfindung wird nachfolgend unter Bezugnahme der folgenden Zeichnungen näher erläutert.
- Fig. 1: ist eine grob schematische Darstellung des Whirlpools gemäß der vorliegenden Erfindung.
- Fig. 2: zeigt in perspektivischer teilweise aufgerissener Darstellung eine Ausführungsform eines Whirlpools gemäß der vorliegenden Erfindung.
- Fig. 3: zeigt schematisch eine Aufsicht auf die wesentlichen Komponenten eines Whirlpools, der im Wesentlichen dem in Fig. 2 gezeigten Whirlpool entspricht.
- Fig. 4a: zeigt einen Querschnitt durch eine geöffnete Rieselrinne.
- Fig. 4b: zeigt einen Ausschnitt einer Draufsicht auf die in Fig. 4a gezeigte Rieselrinne.
- Fig. 5a: zeigt einen Querschnitt durch eine andere Ausführungsform einer Ringleitung.
- Fig. 5b: zeigt eine Ansicht der Ringleitung, die in Fig. 5a gezeigt ist, von unten.
- Fig. 6a: zeigt in schematischer perspektivischer Darstellung ein Einlaufelement des Würzezulaufs an der Innenseite der inneren Kammer.
- Fig. 6b: zeigt den Würzezulauf auf der äußeren Seite der inneren Kammer.
- Fig. 6c: zeigt in schematischer Darstellung das Einlaufelement eines Würzezulaufs gemäß einer weiteren Ausführungsform.

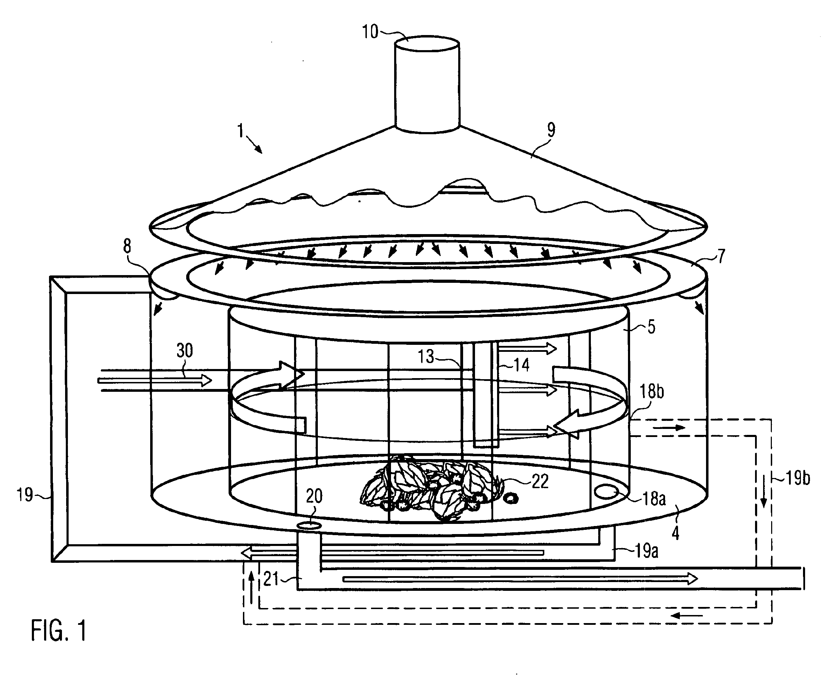

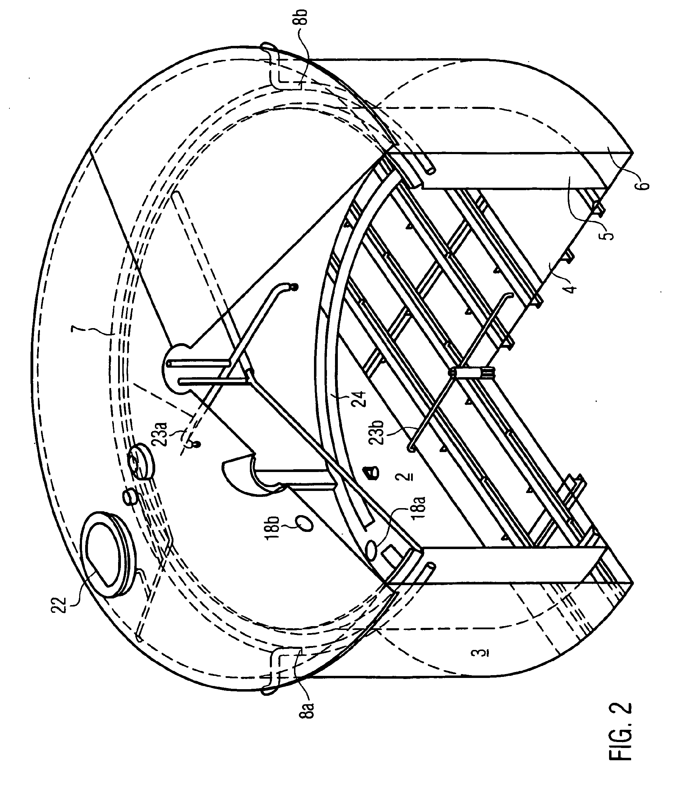

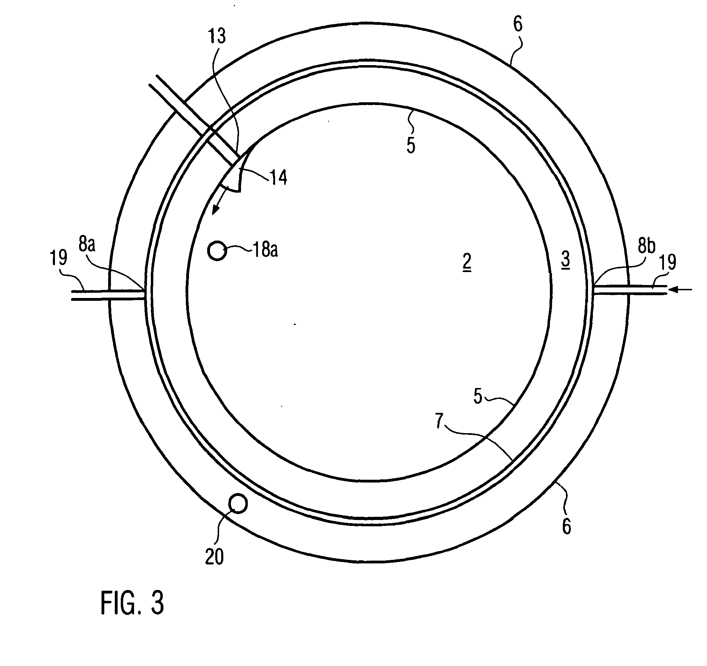

Fig. 1 zeigt in schematischer Darstellung den erfindungsgemäßen Whirlpool in integriertem Stripper. Die Fig. 2 zeigt in perspektivischer Darstellung eine mögliche Ausführungsform des erfindungsgemäßen Strippers, und Fig. 3 zeigt eine Draufsicht auf einen solchen Stripper, wobei lediglich die wesentlichen Komponenten dargestellt wurden.

Nach dem Würzekochen hat das Abkühlen, Abtrennen von Trubteilchen und das Strippen (Ausdampfen) der Würze entscheidende Bedeutung für die Qualität des fertigen Produktes Bier. Wie aus den Figuren 1 bis 2 ersichtlich ist, umfasst der erfindungsgemäße Whirlpool eine innere Kammer 2, die eine im Wesentlichen hohlzylindrische Form aufweist, und die durch die innere Wand 5 und einen Kammerboden 4 begrenzt ist. Der Durchmesser einer solchen Kammer kann je nach Grösse der Brauerei in weiten Berichen von 2m bis 10m variieren. Die innere Kammer 2 ist nach oben offen und dient zur Heißtrubabscheidung mittels Whirlpooleffekt. Dabei kann der Boden 4 leicht geneigt sein (z. B. eine 1% bis 2%ige Neigung zum Ablauf). Die Wand ist vorzugsweise aus Edelstahl (Chrom/Nickel) gebildet.

Die innere Kammer 2 weist einen Würzezulauf 13 auf, über den die Würze durch eine nicht dargestellte Würzepumpe tangential eingeleitet wird, so dass unter Ausnutzung des Whirlpooleffekts der Inhalt der inneren Kammer in rotierende Bewegung gebracht wird. Unter Ausnutzung des Whirlpooleffekts bildet sich in der Mitte der inneren Kammer ein Trubkegel 22 aus.

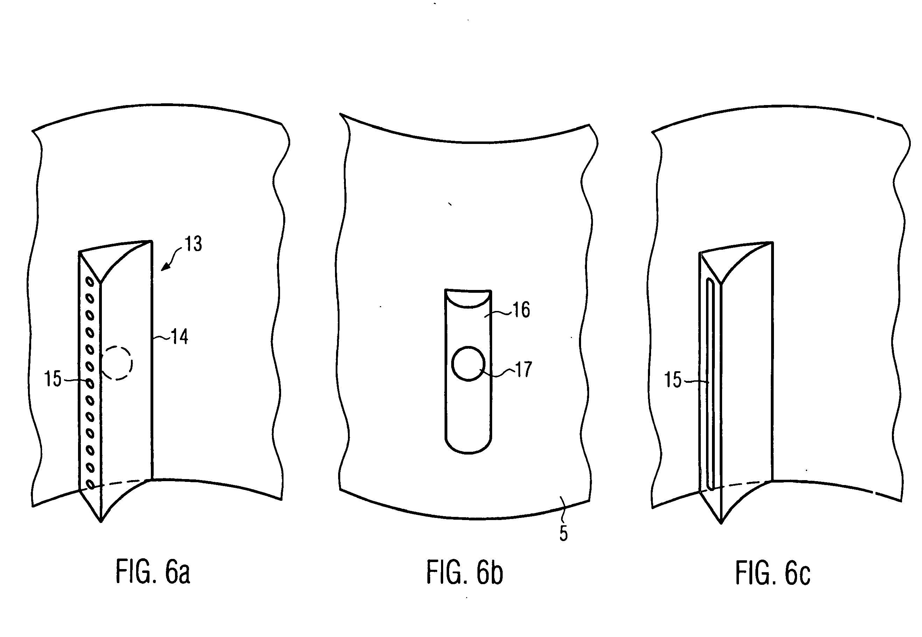

Gemäß einer bevorzugten Ausführungsform, wie in Zusammenhang mit den Figuren 1 bis 3 und 6 erkannt werden kann, umfasst der Würzezulauf, der die Würze im Wesentlichen tangential zur inneren Kammerwand 5 einleitet, ein Einlaufelement 14, das dafür sorgt, dass der Würzezufluss aufgefächert wird. Fig. 6a zeigt eine mögliche Ausführungsform eines derartigen Einlaufelements, das sich an der Innenseite der inneren Kammer 2 befindet. Wie aus Fig. 6b hervorgeht mündet ein in Fig. 6b nicht dargestelltes Zulaufrohr 30 für heiße Würze in dem länglichen Anschlussstutzen 16, der außen an der inneren Kammerwand 5 angeordnet ist. Der Stutzen 16 erstreckt sich in Richtung der Höhe der Whirlpools, so dass das Einlaufelement 14 gleichmäßig angeströmt werden kann. Der Würzezulauf 13, 14 lenkt den Würzestrom derart um, dass er im Wesentlichen tangential zur Kammerwand 5 einströmen kann. Gemäß der vorliegenden Erfindung weist das Einlaufelement 14 mehrere übereinander angeordnete Öffnungen 15 auf, die den Würzezufluss in Richtung der Höhe des Whirlpools auffächern. Somit kann in besonders schonender Art und Weise der Inhalt in die rotierende Bewegung unter Ausnutzung des Whirlpooleffekts gebracht werden. Anstelle der mehreren übereinander angeordneten Öffnungen kann auch ein sich in Richtung der Höhe des Whirlpools erstreckender Schlitz 15 im Einlaufelement 14 vorgesehen sein.

Die innere Kammer 2 umfasst weiter einen Ablauf 18 im Boden 4, über den geklärte Würze abgezogen werden kann. Es ist auch möglich, wie durch die gestrichelten Linien in der Fig. 1 dargestellt ist, dass zusätzlich zu dem Ablauf 18 im Boden 4 der inneren Kammer 2 ein Ablauf 18b im oberen Teil (z.B. im oberen Drittel) der inneren Kammer 2 vorgesehen ist, was ermöglicht, dass bereits Würze abgezogen werden kann, während im unteren Teil noch die Sedimentation im Gange ist.

Der Whirlpool 1 umfasst neben der inneren Kammer die äußere Kammer 3, die um die innere Kammer 2 herum angeordnet ist, und die als Stripper dient, zum Ausdampfen unerwünschter flüchtiger Substanzen aus der von der inneren Kammer 2 überführten Würze. Dabei sind, wie aus den Figuren 1 bis 3 hervorgeht die innere und äußere Kammer 2, 3 konzentrisch ineinander angeordnet. Das bedeutet, dass die Wand 5 der inneren Kammer 2 hier gleichzeitig die innere Wand der äußeren Kammer 3 darstellt. Die äußere Kammer 3 weist darüber hinaus die äußere Wand 6 auf, die vorzugsweise ebenfalls aus Chrom/Nickelstahl gefertigt ist. Das bedeutet, dass hier die äußere Kammer 3 ringförmig um die innere Kammer ausgebildet ist. Die äußere Kammer muss jedoch nicht zwangsläufig eine runde Querschnittsform haben. Darüber hinaus weist die äußere Kammer ebenfalls einen Kammerboden 4 auf. Vorteilhafterweise ist der Kammerboden für die innere und äußere Kammer durchgängig, wie aus Fig. 2 hervorgeht, was den Aufbau wesentlich vereinfacht. Es ist jedoch auch möglich, dass die äußere Kammer 3 einen gesonderten Boden aufweist. Auch die äußere Kammer 3 ist nach oben hin geöffnet.

Die äußere Kammer 3, die zwischen 0,4m und 1 m breit ist, weist mindestens eine Zuführung 8 für Würze aus der inneren Kammer 2 auf. Das bedeutet, dass die geklärte Würze aus der inneren Kammer 2 über einen entsprechenden Ablauf 18a, 18b abgezogen wird und zum Strippen in die äußere Kammer 3 eingeleitet wird. Die Würze kann dabei über eine entsprechende Pumpe aus der inneren Kammer 2 in die äußere Kammer 3 umgepumpt werden. Im oberen Bereich der äußeren Kammer 3 ist eine Verteilereinrichtung 7 vorgesehen, die die Würze über den Umfang der äußeren Kammer 3 verteilt in die äußere Kammer 3 einbringt. In der Fig. 1 ist die Verteilereinrichtung im äußeren Randbereich der Kammer 3 angeordnet. Die Verteilereinrichtung 7 kann aber, wie aus Fig. 2 hervorgeht, ebenfalls zwischen der inneren und äußeren Wand 5, 6 angeordnet sein. Vorzugsweise ist die Verteilereinrichtung 7, wie beispielsweise in Fig. 2 ersichtlich ist, als Ringleitung ausgebildet, wobei die Ringleitung eine oder mehrere Zuführungen 8b, in Fig. 2 zwei Zuführungen 8a, 8b aufweist, die Würze aus der inneren Kammer in die Verteilereinrichtung, d. h. hier die Ringleitung 7 einführen. Mehrere Zuführungen 8 ermöglichen eine gleichmäßigere Verteilung der Würze über den Umfang der äußeren Kammer 3.

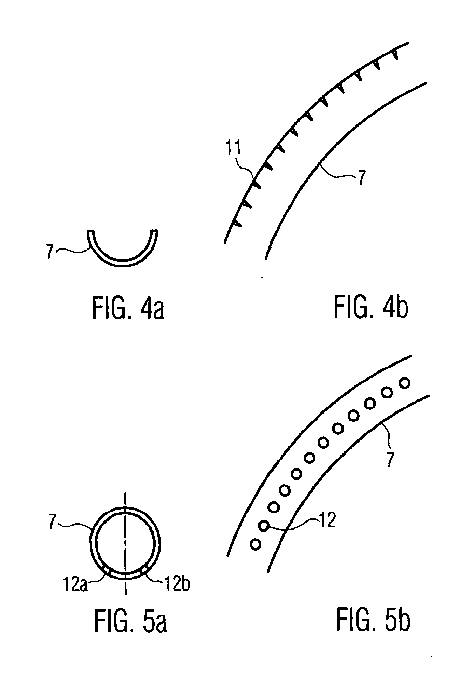

Die Verteilereinrichtung 7 kann unterschiedlich ausgebildet sein. Vorzugsweise ist sie derart ausgebildet, dass die Würze als Rieselfilm in die äußere Kammer 3 eingebracht werden kann. Bei dem in Fig. 5a gezeigten Beispiel weist die Ringleitung 7 einen rohrförmigen Querschnitt auf und hat Öffnungen 12 für den Austritt der Würze. Die Öffnungen sind bei diesem Beispiel als um 90° zueinander versetzt verlaufende Lochreihen 12a und 12b ausgebildet, die gegenüber der Vertikalen einen Winkel von 45° einschliessen. Die aus diesen Öffnungen austretende Würze wird dadurch schräg auf die angrenzenden Wandflächen gerichtet. Es kann aber auch ausreichend sein, nur eine nach unten gerichtete Lochreihe 12 vorzusehen, wie das in Fig. 5b angedeuted ist.

Es ist besonders vorteilhaft, wenn die Verteilereinrichtung 7, wie in Fig. 4a und 4b gezeigt ist, als nach oben offene Rieselrinne 7 ausgebildet ist. Die Rieselrinne 7 kann gegebenenfalls zusätzliche Öffnungen und/oder seitliche Kerben 11 auf zumindest einer Seite aufweisen. Die Würze, die in die Rieselrinne 7 geleitet wird, schwappt dann über die Kanten der Rieselrinne und erzeugt so den entsprechenden Rieselfilm. Eine solche Rieselrinne ist besonders einfach zu reinigen. Durch Ausbildung eines Rieselfilms wird das Ausdampfen der Würze durch die vergrößerte Oberfläche begünstigt. Durch die heiße Würze in der inneren Kammer 2 ist die innere Wand 5 aufgeheizt und weist eine Temperatur in einem Bereich von 90 bis 99° auf. Somit können unerwünschte flüchtige Substanzen aus der von der Verteilereinrichtung 7 herabfließenden Würze ausdampfen. Würze kann über den Ablauf 20 aus der äußeren Kammer 3 über eine nicht dargestellte Pumpe abgezogen werden und beispielsweise einem Kühler zugeführt werden.

Auf den Kammern ist ein Deckel 9 angeordnet, der sowohl die innere als auch die äußere nach oben geöffnete Kammer 2, 3 abdeckt. Der Deckel ist vorzugsweise wiederum aus Chrom/Nickelstahl gefertigt und weist darüber hinaus einen Abzug 10 auf, über den die ausgedampften flüchtigen Substanzen abgeleitet werden können. Wie aus Fig. 2 ersichtlich kann der Deckel 9 mit ein Schauglas 22 versehen sein. Wie weiter aus Fig. 2 hervorgeht, weist der Whirlpool in bekannter Weise mehrere Sprüheinrichtungen 23a, 23b auf, die zum Reinigen der inneren Kammer 2 dienen. Auch die äussere Kammer kann nicht näher dargestellte Spritzköpfe zu Reinigungszwecken haben. Die Zuleitungen für die Sprüheinrichtungen 23a, 23b erfolgen über die Abzugsöffnung., Der Boden 4 der inneren Kammer 2 umfasst weiter eine Begrenzung 24, die dafür sorgt, dass der Trub nicht in den Bereich der Ablauföffnung 18 gelangt.

Das Verhältnis des Durchmessers der inneren Kammer zum Durchmesser der äußeren Kammer liegt in einem Bereich von 0,65 bis 0,95. In den Leitungen 19a und 19b können nicht dargestellte Ventile vorgesehen sein, die den Zufluss der Würze in die äußere Kammer 3 regeln. Die äußere Wand 6 ist bei diesem Ausführungsbeispiel höher als die innere Wand 5.

Der erfindungsgemäße Whirlpool mit integrierten Strippern erlaubt somit die Heißtrubabscheidung und das Strippen in nur einer Vorrichtung durchzuführen.

Nachfolgend wird das Verfahren zur Heißtrubabscheidung und zum Strippen von unerwünschten flüchtigen Substanzen während des Sudhausprozesses beschrieben. Bei dem erfindungsgemäßen Verfahren wird zur Herstellung der Würze zur Bierherstellung aus einer Würzepfanne (nicht dargestellt) über eine Würzepumpe (ebenfalls nicht dargestellt) in die Leitung 30, wie in Fig. 1 dargestellt ist, in Pfeilrichtung gepumpt, bis sie den Würzezulauf 13 zur inneren Kammer 2 erreicht. Über den Würzezulauf 13, 14 wird die Würze umgelenkt, derart, dass sie tangential an der inneren Behälterwand 5 eingebracht wird. Durch das Einlaufelement 14 an der Innenseite der inneren Wand 5 wird der Würzezufluss in Richtung der Höhe des Whirlpools 1 ausgefächert. Die Flüssigkeit in der inneren Kammer 2 dreht sich wie durch die Pfeile in der Kammer angedeutet, dadurch dass die innere Wand so angeströmt wird, dass sich die Würze entlang der Wand bewegt. Somit wird unter Ausnutzung des Whirlpooleffekts der Inhalt der inneren Kammer 2 auf schonende Weise in eine leicht rotierende Bewegung versetzt. Durch den Whirlpooleffekt setzt sich in der Mitte des Bodens 4 der inneren Kammer 2 ein so genannter Trubkegel ab.

Nachdem eine bestimmte Menge an Würze in die innere Kammer 2 eingelaufen ist, erfolgt eine Rastzeit von etwa 15 bis 30 Minuten, in der eine weitere Sedimentation der Trubteilchen in der Würze stattfindet. Es kann bereits während der Sedimentation im oberen Teil beispielsweise über den Ablauf 18 Würze abgezogen werden, während im unteren Teil noch die Sedimentation im Gange ist. Nach der Rastzeit wird die Würze über den unteren Ablauf 18 im Boden 4 der inneren Kammer 2 abgezogen. Das Abziehen kann über eine nicht dargestellte Pumpe erfolgen.

Die aus der inneren Kammer 2 abgezogene Würze wird dann über eine oder mehrere entsprechende Leitungen 19a, 19b in die äußere Kammer 3, d. h. hier den äußeren Ring 7, eingeleitet, um unerwünschte flüchtige Substanzen wie beispielsweise DMS aus der Würze auszudampfen. Dazu wird die Würze über mindestens eine Würzezuführung 8a, b einer Verteilereinrichtung 7 zugeführt, die die Würze gleichmäßig über den Umfang der äußeren Kammer 3 verteilt von oben in die äußere Kammer 3 einbringt. Die Verteilereinrichtung ist vorzugsweise so ausgebildet, dass sie einen Rieselfilm ausbildet. Der Durchsatz an Würze, der in die äußere Kammer 3 eingeführt wird, wird so gewählt, dass die angetrebte volle Würzekühlung in 30 bis 60 Minuten sattfinden kann.

Die langsam, quasi in dünner Schicht herabrinnende Würze weist eine vergrößerte Oberfläche auf, was das das Ausdampfen von unerwünschten flüchtigen Substanzen ermöglicht und begünstigt. Das Ausdampfen wird noch weiter durch die Wärme der inneren Wand 5, die sich durch die heiße Würze auf 90 bis 99°C aufheizt begünstigt. Die flüchtigen Substanzen steigen nach oben und können durch den Abzug 10 des Deckels 9, der sich auf den Kammern 2, 3 befindet, abziehen. Die gestrippte Würze kann über den Ablauf 20 in Pfeilrichtung (siehe Fig. 1) abgeführt werden und beispielsweise über eine Pumpe, einem Kühler, z. B. einem Plattenkühler zugeführt werden. Selbstverständlich kann in der Ableitung 21 ein entsprechendes Ventil vorgesehen sein, das den Ablauf freischaltet oder schließt. Durch die Kombination von Heißtrubabscheidung und Strippen in einer Vorrichtung können sowohl Kosten als auch Platz gespart werden. Vorteile des Systems sind darüber hinaus Zeitersparnis und der schonende Umgang mit dem sensiblen Medium Würze.

## Patentansprüche

1. Whirlpool (1) mit einer inneren Kammer (2) zur Heißtrubabscheidung mittels Whirlpooleffekt
**gekennzeichnet durch**
einen integrierten Stripper, der eine äußere Kammer (3) umfasst, die um die innere Kammer (2) herum angeordnet ist, zum Ausdampfen unerwünschter flüchtiger Substanzen aus von der inneren Kammer (2) überführten Würze.

2. Whirlpool (1) nach Anspruch 1, **dadurch gekennzeichnet, dass** die innere (2) und äußere (3) Kammer konzentrisch ineinander angeordnet sind.

3. Whirlpool (1) nach Anspruch 1 oder 2, **dadurch gekennzeichnet, dass** der Whirlpool (1) eine Verteilereinrichtung (7) umfasst, die aus der inneren Kammer (2) überführte Würze über den Umfang der äußeren Kammer (3) verteilt in den oberen Bereich der äußeren Kammer (3) einbringt.

4. Whirlpool (1) nach Anspruch 3, **dadurch gekennzeichnet, dass** die Verteilereinrichtung (7) eine Ringleitung umfasst, die derart ausgebildet ist, dass die Würze als Rieselfilm in die äußere Kammer (3) eingebracht wird.

5. Whirlpool (1) nach Anspruch 4, **dadurch gekennzeichnet, dass** die Ringleitung (7) mehrere über den Umfang verteilte Öffnungen (12, 12a,12b) umfasst.

6. Whirlpool (1) nach Anspruch 4, **dadurch gekennzeichnet, dass** die Ringleitung (7) zumindest teilweise als offene Rieselrinne ausgebildet ist.

7. Whirlpool (1) nach Anspruch 6, **dadurch gekennzeichnet, dass** die Rieselrinne Öffnungen (12) und/oder seitliche Kerben (11) umfasst.

8. Whirlpool (1) nach mindestens einem der Ansprüche 1 bis 7, **dadurch gekennzeichnet, dass** die innere Kammer (2) einen Würzezulauf (13) aufweist, der die Würze im Wesentlichen tangential zur inneren Kammerwand (5) einbringt, wobei der Würzezulauf ein Einlaufelement (14) umfasst, das mehrere übereinander angeordnete Auslassöffnungen (15) oder einen Schlitz zur Auffächerung des Zuflusses aufweist.

9. Whirlpool (1) nach Anspruch 8, **dadurch gekennzeichnet, dass** das Einlaufelement (14) an der Innenseite (5) der inneren Kammer (2) angeordnet ist.

10. Whirlpool (1) nach mindestens einem der Ansprüche 1 bis 9, **dadurch gekennzeichnet, dass** der Whirlpool einen Deckel (9) umfasst, der die innere und äußere Kammer (2, 3) von oben abdeckt, und der einen Abzug (10) aufweist, um die flüchtigen Substanzen abzuleiten.

11. Verfahren zur Heißtrubabscheidung und zum Strippen von unerwünschten flüchtigen Substanzen,
wobei Würze in eine innere Kammer (2) eines Whirlpools (1) eingeleitet und Heißtrub abgeschieden wird,
**dadurch gekennzeichnet, dass**
die Würze aus der inneren Kammer (2) in eine um die innere Kammer (2) angeordnete äußere Kammer (3) eingeleitet wird, wobei in der äußeren Kammer (3) flüchtige Substanzen ausdampfen.

12. Verfahren nach Anspruch 11, **dadurch gekennzeichnet, dass** die Würze über den Umfang der äußeren Kammer (3) verteilt in den oberen Bereich der äußeren Kammer (3) eingebracht wird.

13. Verfahren nach Anspruch 12, **dadurch gekennzeichnet, dass** die Würze als Rieselfilm in die äußere Kammer (3) eingebracht wird.

14. Verfahren nach einem der Ansprüche 10 bis 13, **dadurch gekennzeichnet, dass** der Würzedurchsatz durch die äußere Kammer (3) so gewählt wird, dass die gewünschte Kühlung in 30 bis 60 Minuten stattfindet.

15. Verfahren nach einem der Ansprüche 11 bis 14, **dadurch gekennzeichnet, dass** die Würze in die innere Kammer (2) tangential zur inneren Wand (5) der inneren Kammer eingebracht wird, wobei der Zufluss der Würze über mehrer übereinander angeordnete Öffnungen oder einen Schlitz erfolgt, so dass der Zufluss aufgefächert wird.

## Claims

1. Whirlpool (1) having an inner chamber (2) for separating hot break by means of a whirlpool effect, **characterized by** an integrated stripper comprising an outer chamber (3), arranged around the inner chamber (2), for evaporating off unwanted volatile substances from wort transferred from the inner chamber (2).

2. Whirlpool (1) according to Claim 1, **characterized in that** the inner (2) and outer (3) chamber are arranged concentrically one inside the other.

3. Whirlpool (1) according to Claim 1 or 2, **characterized in that** the whirlpool (1) comprises a distributor device (7), which introduces wort, which has been transferred from the inner chamber (2), into the upper region of the outer chamber (3) such that it is distributed over the periphery of the outer chamber (3).

4. Whirlpool (1) according to Claim 3, **characterized in that** the distributor device (7) comprises a closed loop, which is configured such that the wort is introduced into the outer chamber (3) as a trickling film.

5. Whirlpool (1) according to Claim 4, **characterized in that** the closed loop (7) comprises a plurality of openings (12, 12a, 12b) distributed over the periphery.

6. Whirlpool (1) according to Claim 4, **characterized in that** the closed loop (7) is configured at least partially as an open trickle channel.

7. Whirlpool (1) according to Claim 6, **characterized in that** the trickle channel comprises openings (12) and/or lateral notches (11).

8. Whirlpool (1) according to at least one of Claims 1 to 7, **characterized in that** the inner chamber (2) has a wort feed (13), which introduces the wort substantially tangentially to the inner chamber wall (5), the wort feed comprising an inlet element (14) which has a plurality of outlet openings (15) disposed one above the other or a slot for fanning out the inflow.

9. Whirlpool (1) according to Claim 8, **characterized in that** the inlet element (14) is disposed on the inner side (5) of the inner chamber (2).

10. Whirlpool (1) according to at least one of Claims 1 to 9, **characterized in that** the whirlpool comprises a cover (9), which covers the inner and outer chamber (2, 3) from above and which has a flue (10) to draw off the volatile substances.

11. Process for separating hot break and
for stripping out unwanted volatile substances, wherein wort is led into an inner chamber (2) of a whirlpool (1) and hot break is separated off, **characterized in that** the wort is led from the inner chamber (2) into an outer chamber (3) arranged around the inner chamber (2), volatile substances evaporating off in the outer chamber (3).

12. Process according to Claim 11, **characterized in that** the wort is introduced into the upper region of the outer chamber (3) such that it is distributed over the periphery of the outer chamber (3).

13. Process according to Claim 12, **characterized in that** the wort is introduced into the outer chamber (3) as a trickling film.

14. Process according to one of Claims 10 to 13, **characterized in that** the wort throughput through the outer chamber (3) is chosen such that the desired cooling takes places within 30 to 60 minutes.

15. Process according to one of Claims 11 to 14, **characterized in that** the wort is introduced into the inner chamber (2) tangentially to the inner wall (5) of the inner chamber, the inflow of the wort being realized via a plurality of openings disposed one above the other or via a slot, so that the inflow is fanned out.

## Revendications

1. Bac whirlpool (1) comprenant une chambre intérieure (2) pour la séparation du trouble chaud par effet de whirlpool,
**caractérisé par**
un stripper intégré comprenant une chambre extérieure (3), disposée tout autour de la chambre intérieure (2), pour l'évaporation de substances volatiles inopportunes du moût transféré de la chambre intérieure (2).

2. Bac whirlpool (1) suivant la revendication 1, **caractérisé en ce que** la chambre intérieure (2) et la chambre extérieure (3) sont disposées concentriquement l'une dans l'autre.

3. Bac whirlpool (1) suivant l'une des revendications 1 et 2, **caractérisé en ce que** le bac whirlpool (1) comprend un dispositif répartiteur (7), qui introduit et répartit le moût transféré de la chambre intérieure (2) sur le pourtour de la chambre extérieure (3) dans la zone supérieure de la chambre extérieure (3).

4. Bac whirlpool (1) suivant la revendication 3, **caractérisé en ce que** le dispositif répartiteur (7) comprend une ceinture, qui est réalisée de telle sorte que le moût est introduit sous forme de film de ruissellement dans la chambre extérieure (3).

5. Bac whirlpool (1) suivant la revendication 4, **caractérisé en ce que** la ceinture (7) comporte plusieurs orifices (12, 12a, 12b) répartis sur le pourtour.

6. Bac whirlpool (1) suivant la revendication 4, **caractérisé en ce que** la ceinture (7) est réalisée au moins en partie sous forme de goulotte de ruissellement ouverte.

7. Bac whirlpool (1) suivant la revendication 6, **caractérisé en ce que** la goulotte de ruissellement comporte des orifices (12) et/ou des entailles latérales (11).

8. Bac whirlpool (1) suivant l'une au moins des revendications 1 à 7, **caractérisé en ce que** la chambre intérieure (2) présente une arrivée de moût (13), qui introduit le moût de façon essentiellement tangentielle en direction de la paroi de chambre (5) intérieure, l'arrivée de moût comportant un élément d'admission (14) qui présente plusieurs orifices de sortie (15) superposés ou une fente pour la dispersion en éventail du flux d'arrivée.

9. Bac whirlpool (1) suivant la revendication 8, **caractérisé en ce que** l'élément d'admission (14) est disposé sur le côté intérieur (5) de la chambre intérieure (2).

10. Bac whirlpool (1) suivant l'une au moins des revendications 1 à 9, **caractérisé en ce que** le bac whirlpool comporte un couvercle (9), qui recouvre par le haut la chambre intérieure et la chambre extérieure (2, 3) et présente un évent (10), pour évacuer les substances volatiles.

11. Procédé de séparation du trouble chaud et de stripage de substances volatiles inopportunes, dans lequel du moût est introduit dans une chambre intérieure (2) d'un bac whirlpool et du trouble chaud est séparé,
**caractérisé en ce que**
le moût est introduit de la chambre intérieure (2) dans une chambre extérieure (3) disposée autour de la chambre intérieure (2), des substances volatiles étant alors évaporées dans la chambre extérieure (3).

12. Procédé suivant la revendication 11, **caractérisé en ce que** le moût est introduit et réparti sur le pourtour de la chambre extérieure (3) dans la zone supérieure de la chambre extérieure (3).

13. Procédé suivant la revendication 12, **caractérisé en ce que** le moût est introduit sous forme de film de ruissellement dans la chambre extérieure (3).

14. Procédé suivant l'une des revendications 10 à 13, **caractérisé en ce que** le débit du moût au travers de la chambre extérieure (3) est choisi de sorte que le refroidissement souhaité s'effectue en 30 à 60 minutes.

15. Procédé suivant l'une des revendications 11 à 14, **caractérisé en ce que** le moût est introduit dans la chambre intérieure (2) de façon tangentielle par rapport à la paroi intérieure (5) de la chambre intérieure, l'arrivée du moût s'effectuant alors au travers de plusieurs orifices superposés ou d'une fente, de sorte que le flux d'arrivée est dispersé en éventail.
